# EUROPÄISCHE PATENTANMELDUNG

(11) **EP 2 033 843 A2**
(43) Veröffentlichungstag der Anmeldung: **11.03.2009**
(21) Anmeldenummer: 08011524.9
(22) Anmeldetag: 25.06.2008
(51) Int. Cl.: B60R 7/04

(54) **Drehbares Ablagefach zur Aufnahme von Gegenständen in einem Fahrzeug**

(30) Priorität: 05.09.2007 DE 102007042126
(71) Anmelder: GM Global Technology Operations, Inc., Detroit, MI 48265-3000 (US)
(72) Erfinder: Damm, Karsten, 60439 Frankfurt am Main (DE)
(74) Vertreter: Strauss, Peter

(57) **Zusammenfassung**

Die Erfindung betrifft ein drehbares Ablagefach (7) zur Aufnahme von Gegenständen in einem Fahrzeug, insbesondere im Bereich einer Mittelkonsole (3) eines Personenkraftwagens.

Erfindungsgemäß ist vorgesehen, dass das Ablagefach ein um eine horizontale Achse (9) drehbares Element (6) aufweist, wobei das Element am Umfang mit Vertiefungen (13) zur Aufnahme von Gegenständen versehen ist.

Ein solches Ablagefach weist bei baulich einfacher Gestaltung und einfacher Bedienbarkeit eine große Funktionalität auf.

## Beschreibung

Die Erfindung betrifft ein drehbares Ablagefach zur Aufnahme von Gegenständen in einem Fahrzeug, insbesondere im Bereich einer Mittelkonsole eines Personenkraftwagens.

Das grundsätzliche Problem an Ablageflächen im Fahrzeug ist entweder deren Mangel oder die Unmöglichkeit für alle Anwendungen eine entsprechende Größe und Form zu bieten. Hinzu kommt die Schwierigkeit, nützliche Fächer in entsprechender Größe formal überzeugend in das Fahrzeug zu integrieren. Gängige Lösungen bieten lediglich eine einzige Nutzungsmöglichkeit. Ein Ablagefach bleibt unverändert an seiner definierten Position.

Ablagefächer in Fahrzeugen besitzen oftmals nur eine unzureichende Funktionalität. So steckt der Benutzer beispielsweise aus Mangel an Ablagemöglichkeiten sein Mobiltelefon zur Aufbewahrung in einen Aschenbecher. Der intendierte Gebrauch des Aschenbechers ist nicht, dort Gegenstände aufzubewahren, obwohl der potentielle Gebrauch das zulässt. Diese Situation verursacht beim Nutzer das Gefühl, das Interior sei nicht gut durchdacht.

Ein drehbares Ablagefach der eingangs genannten Art ist aus der JP 2001-122030 A bekannt. Dort sind im Bereich der Mittelkonsole eines Personenkraftwagens mehrere Ablagefächer gestapelt und um eine gemeinsame vertikale Achse drehbar. Ein Ablagefach dient beispielsweise der Aufnahme eines Laptop, das in den Bereich des Beifahrersitzes ausgeschwenkt werden kann, sodass der Beifahrer am Laptop arbeiten kann.

Aus der DE 100 07 594 A1 ist eine Halterung für einen Getränkebecher in einem Fahrzeug bekannt. Zur platzsparenden Unterbringung der Halterung wird vorgeschlagen, diese als Aussparung beispielsweise in einem Armaturenbrett des Fahrzeuges auszubilden und mit einem in die Aussparung hinein- und aus dieser herausschwenkbaren Aschenbecher zu versehen. In der aus der Aussparung um eine horizontale Achse herausgeschwenkten Haltestellung des Aschenbechers verschließt dieser die Aussparung seitlich, sodass beispielsweise ein Becher in die Aussparung einstellbar ist. Der Einbauraum für den Aschenbecher wird zugleich auch zum Einstellen des Bechers benutzt.

In der DE 10 2004 00 638 A1 ist eine Aufnahmevorrichtung für Gegenstände im Innenraum eines Fahrzeugs beschrieben, bei der ein Formkörper, insbesondere ein Schaumstoffkörper mehrere Aussparungen mit unterschiedlichen geometrischen Formen für die lagesichere Ablage von unterschiedlichen Gegenständen aufweist. Hierbei handelt es sich um die vorbeschriebenen Ablagefächer, die unveränderbar sind und an ihrer definierten Position verbleiben.

Aufgabe der vorliegenden Erfindung ist es, ein drehbares Ablagefach der eingangs genannten Art zu schaffen, das bei baulich einfacher Gestaltung und einfacher Bedienbarkeit eine optimale Funktionalität beinhaltet.

Gelöst wird die Aufgabe dadurch, dass das Ablagefach ein um eine horizontale Achse drehbares Element aufweist, wobei das Element am Umfang mit Vertiefungen zur Aufnahme von Gegenständen versehen ist.

Die Gestaltung des drehbaren Ablagefachs ermöglicht es, am Umfang des drehbaren Elementes mehrere Vertiefungen zur Aufnahme von Gegenständen anzuordnen. Durch Drehen des Elementes in eine definierte Position ist die jeweilige Aufnahme dem Nutzer zugewandt und er kann das Ablagefach gemäß der Vorgabe dieser Vertiefung nutzen. Es ergibt sich somit eine Maximierung der Raumausnutzung im Fahrzeug unter dem Aspekt der Funktionalität des drehbaren Ablagefachs. Das drehbare Ablagefach bietet unterschiedliche, schnell wechselbare Vertiefungen zur Aufnahme der Gegenstände. Die Vertiefungen sind derart unterschiedlich gestaltet, dass sie weitgehend den individuellen Wünschen des Nutzers Rechnung tragen, somit sich an dessen jeweiligen Bedürfnissen und Vorlieben orientieren. Die Erfindung bringt somit den realen Gebrauch eines drehbaren Ablagefachs mit dem intendierten Gebrauch in Einklang.

Die Vertiefungen sind vorzugsweise so gestaltet, dass sie der Aufnahme unterschiedlichster Gegenstände dienen. In der einen Drehstellung des drehbaren Elementes ist beispielsweise dem Nutzer eine große Vertiefung, insbesondere eine im Querschnitt kreisrunde relativ große Vertiefung zugewandt, die geeignet ist, eine Flasche mit einem Volumen von 1,5 Liter aufzunehmen. In einer anderen Drehstellung des drehbaren Elementes sind dem Nutzer beispielsweise zwei kleinere, im Querschnitt kreisrunde Vertiefungen zugewandt, die keine so große Tiefe aufweisen und demzufolge vorrangig geeignet sind, Becher aufzunehmen. In einer anderen Stellung ist dem Nutzer beispielsweise eine mehreckige, insbesondere quadratischen Querschnitt aufweisende Vertiefung relativ geringer Tiefe zugewandt. Diese Vertiefung ist besonders geeignet, eine Zigarettenschachtel, ein Mobiltelefon, einen iPod und dergleichen aufzunehmen. Somit können unterschiedliche Gegenstände, je nach eingestellter Drehposition des drehbaren Elementes aufbewahrt werden.

Es wird als besonders vorteilhaft angesehen, wenn das drehbare Element im Querschnitt, senkrecht zu seiner horizontalen Achse, mehreckig ausgebildet ist. Insbesondere ist das drehbare Element als Quader ausgebildet. Bei Ausbildung als Quader sind vier Seiten gebildet, wobei insbesondere drei Flächen, die parallel zur horizontalen Achse des drehbaren Elements verlaufen, mit Vertiefungen versehen sind, während die vierte Fläche des Quaders keine Vertiefung aufweist. Der besondere Vorteil dieser letztgenannten Fläche ist darin zu sehen, dass in einer entsprechenden Drehposition des drehbaren Elements diese Fläche unmittelbar mit den angrenzenden Flächen im Fahrzeug, insbesondere den angrenzenden Flächen der Mittelkonsole des Personenkraftwagens fluchtet bzw. sich an diese anschließt. In dieser Position wird die Funktionalität des drehbaren Elements als Ablagefach nicht wahrgenommen.

Bei Ausbildung des drehbaren Elements als Quader mit Vertiefungen ist dieser insbesondere um die durch die Schnittpunkte der Diagonalen des Quaders gehende Achse drehbar.

Das drehbare Element ist vorzugsweise in unterschiedlichen Drehstellungen, insbesondere unterschiedlichen Aufnahmepositionen für die Gegenstände rastierbar. Zweckmäßig bieten sich bei Verwendung des drehbaren Elements in Form eines Quaders und auch bei einer Ausbildung des drehbaren Elementes als Zylinder vier Drehstellungen an, in denen das drehbare Element rastierbar ist, insbesondere die Drehstellungen 0°, 90°, 180° und 270°.

Das Drehen des drehbaren Elements in die gewünschte Stellung erfolgt beispielsweise über ein seitlich entlang der Drehachse integriertes Stellrad, ähnlich dem einer Neigungsverstellung für den Sitzrücken eines Sitzes. Durch ein Einrasten in einer der gewünschten Drehstellungen des drehbaren Elements, insbesondere in einer der vier Endstellungen, kann sich das drehbare Element nicht von selbst wieder lösen. Hierdurch wird ein unbeabsichtigtes Verdrehen, beispielsweise bei starker Verzögerung oder Beschleunigung des Fahrzeugs vermieden.

Das drehbare Ablagefach ist insbesondere in die Mittelkonsole integriert. Hierbei bietet sich der Raum zwischen dem Fahrersitz und dem Beifahrersitz an. In einer Stellung des drehbaren Elements fluchtet vorzugsweise deren obere, neutrale Fläche mit dem Bereich der Mittelkonsole, der sich an die drehbare Einheit anschließt.

Weitere Merkmale der Erfindung sind in den Unteransprüchen, der Beschreibung der Zeichnung und der Zeichnung selbst dargestellt, wobei bemerkt wird, dass alle Einzelmerkmale und alle Kombinationen von Einzelmerkmalen weitere erfinderische Ausgestaltungen darstellen.

Eine bevorzugte Ausführungsform ist nachfolgend unter Hinweis auf die Zeichnung näher erläutert. Es zeigt:
- Figur 1: das in eine Mittelkonsole eines PKW integrierte erfindungsgemäße drehbare Ablagefach mit neben der Mittelkonsole angeordneten Sitzen des PKW, veranschaulicht in einer ersten Gebrauchsstellung des drehbaren Elements,
- Figur 2: das bei dem Ablagefach Verwendung findende drehbare Element,
- Figur 3 bis Figur 12: eine Darstellung gemäß Figur 1 für andere Gebrauchsstellungen bzw. Zwischenstellungen zwischenGebrauchsstellungen, teilweise mit Gegenständen veranschaulicht, die von den Vertiefungen im drehbaren Element aufgenommenen werden.

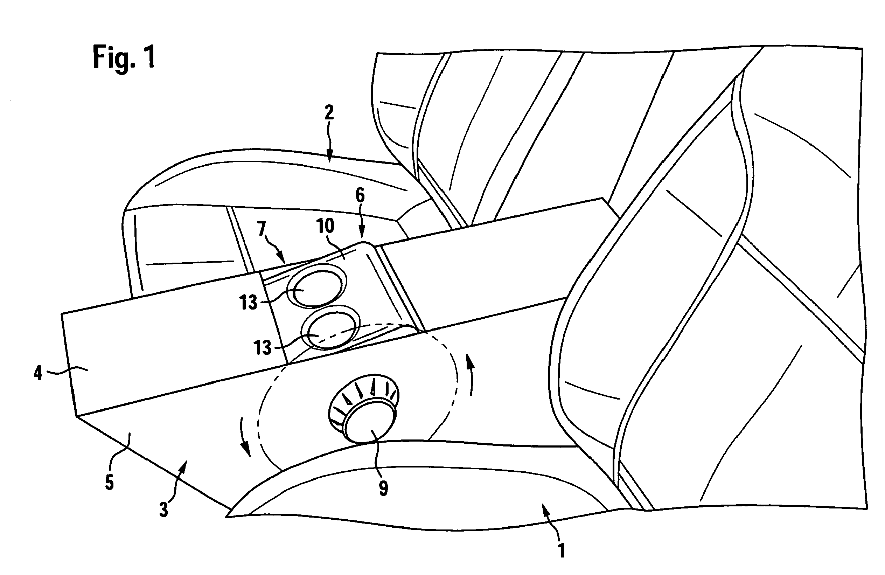

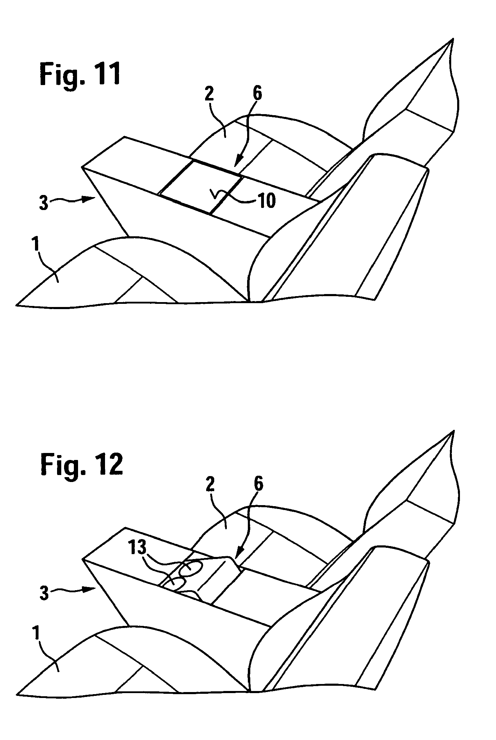

Figur 1 zeigt für den Bereich eines Personenkraftwagens den Fahrersitz 1, den Beifahrersitz 2 sowie die zwischen den Sitzen 1 und 2 befindliche Mittelkonsole 3 des Fahrzeugs. Die Mittelkonsole 3 weist eine obere horizontale Fläche 4 sowie seitliche vertikale Flächen 5 auf, wobei nur die dem Fahrersitz 1 zugewandte vertikale Fläche 5 sichtbar ist. Die obere Fläche 4 ist unterbrochen, und in diesem Bereich in der Mittelkonsole 3 ist ein Hohlraum gebildet, der der schwenkbaren Aufnahme eines Quaders mit quadratischem Querschnitt dient, der das drehbare Element 6 des drehbaren Ablagefachs 7 darstellt. Dieses drehbare Element 6 ist in der Fig. 12 veranschaulicht.

Das drehbare Element 6 ist um eine horizontale Achse 8 schwenkbar, und zwar mittels jeweils eines Stellrades 9, das sowohl im Bereich der dem Fahrersitz 1 zugewandten Fläche 5 als auch der anderen dem Beifahrersitz 2 zugewandten Fläche angeordnet ist, sodass eine Drehung des drehbaren Elementes 6 sowohl von der Fahrerseite als auch von der Beifahrerseite aus möglich ist. Nicht veranschaulicht sind Rastglieder, mittels der das Einrasten des drehbaren Elements 6 in einer der vier Endstellungen gewährleistet wird, sodass sich das drehbare Element 6 nicht von selbst lösen kann, um ein unbeabsichtigtes Verdrehen, z. B. bei starker Verzögerung oder Beschleunigung des Fahrzeugs, zu vermeiden.

Wie insbesondere der Darstellung der Figur 1 zu entnehmen ist, befindet sich in der jeweiligen der vier Endstellungen die obere Fläche 10 des drehbaren Elements 6 in fluchtender Position mit der oberen Fläche 4 der Mittelkonsole 3.

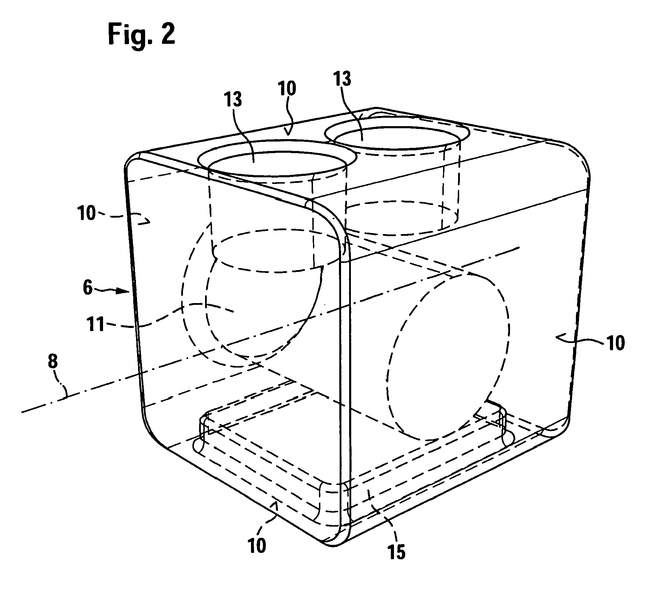

Wie insbesondere der Darstellung der Figur 2 zu entnehmen ist, sind von den vier Umfangsflächen des quaderförmigen, drehbaren Elements 6 drei mit Vertiefungen zur Aufnahme von Gegenständen versehen. Eine Fläche weist eine große Vertiefung 11, die im Querschnitt kreisrund gestaltet ist auf, wobei diese zylindrische Vertiefung 11 beispielsweise der Aufnahme einer 1,5 1 PET-Kunststoffflasche 12 dient. Eine andere der Flächen weist zwei kleinere zylindrische Vertiefungen 13 auf, die der Aufnahme von zwei kleineren Flaschen oder zwei Bechern 14 dienen. Die dritte Fläche weist eine quaderförmige Vertiefung 15 relativ geringer Tiefe auf, beispielsweise zur Aufnahme einer Zigarettenschachtel 16, eines Mobiltelefons, eines iPods oder dergleichen. Die vierte genannte Fläche ist neutral gestaltet, weist somit keine Vertiefung auf, sodass sie, wenn sie die obere Fläche 10 darstellt, eine Ebene mit der Fläche 4 der Mittelkonsole bildet.

Die einzelnen Gebrauchsstellungen sowie Zwischenstellungen des drehbaren Elements 6 sind in den Figuren 1 und 3 bis 12 veranschaulicht:

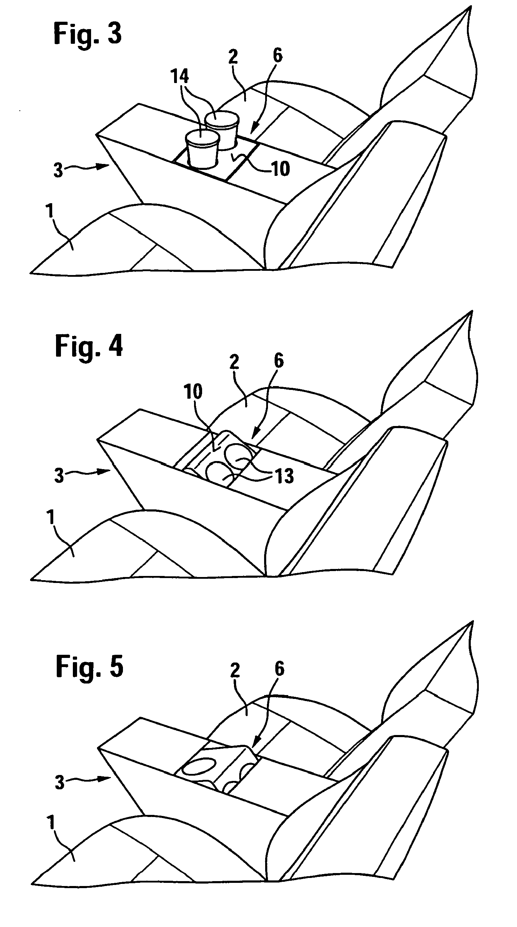

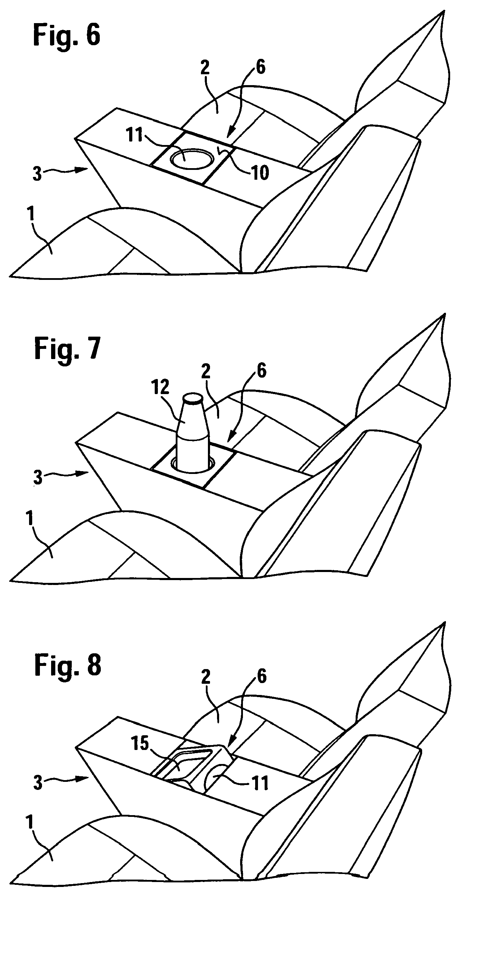

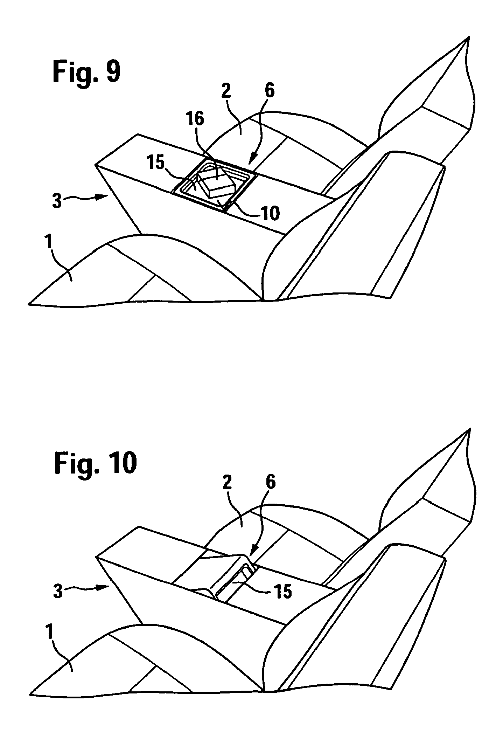

Figur 1 zeigt eine erste Gebrauchsstellung des drehbaren Elements 6, in der die obere Fläche 10 der beiden kleineren Vertiefungen 13 nach oben gerichtet ist, somit diese obere Fläche 10 eine Ebene mit der Fläche 4 bildet. Figur 3 zeigt zwei in die beiden kleineren Vertiefungen 13 eingesetzte Becher 14. Ausgehend von der Position in Figur 1 wird das drehbare Element 6 mittels des Stellrades 9 bei Aufhebung der Rastierung gedreht. Figur 4 zeigt eine erste Zwischenstellung, Figur 5 eine zweite Zwischenstellung, Figur 6 die um 90° bezüglich der Position nach Figur 1 verdrehte Stellung des drehbaren Elements 6. In dieser in Figur 6 gezeigten Stellung bildet die obere Fläche 10 die die große Vertiefung 11 aufweist, eine Ebene mit der Fläche 4 der Mittelkonsole. Figur 7 veranschaulicht für diese zweite Gebrauchsstellung eine in die große Vertiefung 11 eingesetzte große Flasche 12. Beim weiteren Drehen des drehbaren Elements 6 wird zunächst die Zwischenstellung gemäß Figur 8 und dann die dritte Gebrauchsstellung gemäß Figur 9 erreicht (um 180° verdrehte Stellung gemäß der Ausgangsstellung in Figur 1). In dieser in Figur 9 gezeigten dritten Gebrauchsstellung weist die Oberfläche 10 die Vertiefung 15 geringer Tiefe auf. In der Figur 9 ist eine in diese Vertiefung 15 eingelegte Zigarettenschachtel 16 veranschaulicht. Ausgehend von dieser dritten Gebrauchsstellung wird das drehbare Element 6 weitergedreht, wobei eine Zwischenstellung gemäß Figur 10 und eine vierte Stellung gemäß Figur 11 veranschaulicht ist, wobei in dieser vierten Stellung das drehbare Element 6, ausgehend von der Ausgangsstellung in Figur 1, um 270° geschwenkt ist. In dieser vierten Stellung gemäß Figur 1 stellt sich die obere Fläche 10 als neutrale Fläche dar, somit ohne Vertiefung und es ist diese Oberfläche 10 in derselben Ebene wie die Fläche 4 der Mittelkonsole 3 angeordnet. In dieser Stellung des drehbaren Elements 6 stellt sich die Mittelkonsole 3 einschließlich des drehbaren Elements 6 somit als homogenes Teil dar.

Figur 12 zeigt eine weitere Drehung des drehbaren Elements 6 aus der Stellung gemäß Figur 11. Figur 12 stellt eine Zwischenstellung des drehbaren Elements 6 kurz vor Erreichen der ersten Gebrauchsstellung gemäß Figur 1 dar.

Selbstverständlich ist die vorliegende Erfindung nicht auf die konkrete Ausbildung des drehbaren Elements 6 mit den beschrieben Vertiefungen beschränkt. Es sind auch andere Gestaltungen von Ausnehmungen im drehbaren Element 6 denkbar, auch Ausnehmungen bzw. Vertiefungen, die verschließbar sind, insbesondere mittels eines Rollos oder Deckels verschließbar sind.

### Bezugszeichenliste

- Fahrersitz: 1
- Beifahrersitz: 2
- Mittelkonsole: 3
- Fläche: 4
- Fläche: 5
- Drehbares Element: 6
- Drehbares Ablagefach: 7
- Horizontale Achse: 8
- Stellrad: 9
- Obere Fläche: 10
- Vertiefung: 11
- Flasche: 12
- Vertiefung: 13
- Becher: 14
- Vertiefung: 15
- Zigarettenschachtel: 16

## Patentansprüche

1. Drehbares Ablagefach (7) zur Aufnahme von Gegenständen (12, 14, 16) in einem Fahrzeug, insbesondere im Bereich einer Mittelkonsole (3) eines Personenkraftwagens, **dadurch gekennzeichnet, dass** das Ablagefach (7) ein um eine horizontale Achse (8) drehbares Element (6) aufweist, wobei das Element (6) am Umfang mit Vertiefungen (11, 13, 15) zur Aufnahme der Gegenstände (12, 14, 16) versehen ist.

2. Ablagefach nach Anspruch 1, **dadurch gekennzeichnet, dass** das drehbare Element (6) im Querschnitt, senkrecht zur Achse (8), mehreckig oder kreisrund ausgebildet ist.

3. Ablagefach nach Anspruch 2, **dadurch gekennzeichnet, dass** das drehbare Element (6) quadratischen Querschnitt aufweist.

4. Ablagefach nach einem der Ansprüche 1 bis 3, **dadurch gekennzeichnet, dass** das drehbare Element (6) die Form eines Quaders aufweist.

5. Ablagefach nach Anspruch 4, **dadurch gekennzeichnet, dass** das drehbare Element (6) um die durch die Schnittpunkte der Diagonalen des Quaders gehende Achse (8) drehbar ist.

6. Ablagefach nach einem der Ansprüche 1 bis 5, **dadurch gekennzeichnet, dass** das drehbare Element (6) mehrere ebene Flächen (10) aufweist, die senkrecht zur Querschnittsebene des drehbaren Elements (6) angeordnet sind.

7. Ablagefach nach Anspruch 6, **dadurch gekennzeichnet, dass** ebene Flächen (10) mit den Vertiefungen (11, 13, 15) versehen sind.

8. Ablagefach nach Anspruch 7, **dadurch gekennzeichnet, dass** eine ebene Fläche (10) eine große Vertiefung (11), insbesondere eine im Querschnitt kreisrunde Vertiefung, und/oder eine andere ebene Fläche (10) mehrere kleinere Vertiefungen (13), insbesondere zwei im Querschnitt kreisrunde Vertiefungen (13), und/oder eine weitere ebene Fläche (10) eine mehreckige, insbesondere im Querschnitt quadratische Vertiefung (15) relativ geringer Tiefe aufweist.

9. Ablagefach nach Anspruch 7 oder 8, **dadurch gekennzeichnet, dass** eine ebene Fläche (10) keine Vertiefung aufweist.

10. Ablagefach nach einem der Ansprüche 1 bis 9, **dadurch gekennzeichnet, dass** das drehbare Element (6) in die Mittelkonsole (3) des Personenkraftwagens integriert ist und der jeweils obere Bereich (10) des drehbaren Elements bündig an die Mittelkonsole (3) in deren dem drehbaren Element benachbarten Bereich anschließt.

11. Ablagefach nach einem der Ansprüche 1 bis 10, **dadurch gekennzeichnet, dass** das drehbare Element (6) in unterschiedlichen Drehstellungen, insbesondere unterschiedlichen Aufnahmepositionen für die Gegenstände (11, 13, 15) rastierbar ist.

12. Ablagefach nach Anspruch 11, **dadurch gekennzeichnet, dass** das drehbare Element (6) in vier Drehstellungen rastierbar ist, insbesondere in den Drehstellungen 0°, 90°, 180°, 270°.

13. Ablagefach nach einem der Ansprüche 1 bis 12, **dadurch gekennzeichnet, dass** das drehbare Element (6) mittels eines externen Stellrads (9) drehbar ist.

14. Ablagefach nach einem der Ansprüche 1 bis 13, **dadurch gekennzeichnet, dass** die Vertiefung (11, 13, 15) verschließbar ist, insbesondere mittels eines Rollos oder Deckels verschließbar ist.
